(19) **Europäisches Patentamt**
**European Patent Office**
**Office européen des brevets**

(11) **EP 4 073 500 B1**

(12) **EUROPÄISCHE PATENTSCHRIFT**

(45) Veröffentlichungstag und Bekanntmachung des Hinweises auf die Patenterteilung:
**22.11.2023  Patentblatt 2023/47**

(21) Anmeldenummer: **20821170.6**

(22) Anmeldetag: **08.12.2020**

(51) Internationale Patentklassifikation (IPC):
**G01N 27/417** (2006.01)

(52) Gemeinsame Patentklassifikation (CPC):
**G01N 27/4175**

(86) Internationale Anmeldenummer:
**PCT/EP2020/084985**

(87) Internationale Veröffentlichungsnummer:
**WO 2021/116059 (17.06.2021 Gazette 2021/24)**

(54) **VERFAHREN UND STEUERGERÄT ZUM BESTIMMEN EINES MESSSTROMWERTES EINER BREITBAND-LAMBDASONDE**

METHOD AND CONTROL UNIT FOR DETERMINING THE CURRENT VALUE OF A BROADBAND LAMBDA PROBE

METHODE ET UNITE DE CONTROLE POUR DETERMINER LA VALEUR DE COURANT D'UNE SONDE LAMBDA A LARGE BANDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.12.2019  DE 102019219616**

(43) Veröffentlichungstag der Anmeldung:
**19.10.2022  Patentblatt 2022/42**

(73) Patentinhaber: **Robert Bosch GmbH**
**70442 Stuttgart (DE)**

(72) Erfinder:
- **MEZGER, Florian**
  **70565 Stuttgart (DE)**
- **KNEER, Andreas**
  **73257 Koengen (DE)**
- **CHAUVET, Yannick**
  **70563 Stuttgart (DE)**
- **ZOBEL, Tobias-Gerhard**
  **70469 Stuttgart (DE)**

(56) Entgegenhaltungen:
DE-A1-102017 204 236     US-A1- 2015 177 209
US-A1- 2016 169 832

- **RISHIRA K A ET AL: "Design and development of controller for bosch 4.2 oxygen sensor using dSPACE tools: Controller designed using Matlab Simulink and controldesk", 2017 INTERNATIONAL CONFERENCE ON ELECTRICAL, ELECTRONICS, COMMUNICATION, COMPUTER, AND OPTIMIZATION TECHNIQUES (ICEECCOT), IEEE, 15. Dezember 2017 (2017-12-15), Seiten 115-121, XP033317436, DOI: 10.1109/ICEECCOT.2017.8284651 ISBN: 978-1-5386-1205-7 [gefunden am 2018-02-07]**

## Beschreibung

Stand der Technik

Die vorliegende Erfindung betrifft ein Verfahren zum Bestimmen eines Messstromwertes einer Breitband-Lambdasonde nach dem Oberbegriff des Anspruchs 1 sowie ein dazu eingerichtetes Steuergerät nach dem Oberbegriff des unabhängigen Vorrichtungsanspruchs.

Bekannt ist damit insbesondere ein Verfahren zum Bestimmen eines Messstromwertes einer Breitband-Lambdasonde, die eine Nernstzelle und eine Pumpzelle aufweist, wobei eine sich über der Nernstzelle einstellende Potenzialdifferenz erfasst und von einer Pumpstrom-Regelschaltung zu einem Pumpstromstellwert verarbeitet wird, aus dem eine steuerbare Stromquelle einen realen Pumpstrom erzeugt, der der Pumpzelle an einer Pumpelektrode zugeführt wird, und wobei ein Messwert des aus einer Gegenelektrode der Pumpzelle herausfließenden elektrischen Stroms als ein Pumpstrommesswert erfasst wird.

Breitband-Lambdasonden werden seit Jahren in Serie verwendet und zum Beispiel in dem Kraftfahrtechnischen Taschenbuch, 24. Auflage, 2002 auf Seite 152 beschrieben. Sie weisen ein Messgasvolumen auf, in dem sich unter anderem ein Messgasbestandteil mit einer zu messenden Konzentration befindet. Die Konzentration des Messgasbestandteils im Messgasvolumen ist durch einen Teilchenaustausch mit einem Messgasreservoir beeinflussbar, der durch zwei verschiedene Effekte bewirkt wird. Ein erster Effekt ergibt sich dadurch, dass das Messgasvolumen in definiert begrenztem Maße, zum Beispiel über einen kleinen Kanal, Teilchen mit einem Messgasreservoir austauschen kann. Das Messgasreservoir ist zum Beispiel Abgas eines Verbrennungsmotors. Die Flussrichtung der Teilchen ist dabei immer zum Ort der kleineren Konzentration des Messgasbestandteils gerichtet. Der Messgasbestandteil ist zum Beispiel Sauerstoff. Ein zweiter Effekt ergibt sich durch einen elektrischen Pumpstrom, mit dem Teilchen des Messgasbestandteils, also zum Beispiel Sauerstoff, je nach Polarität des elektrischen Pumpstroms vom Reservoir in das Messgasvolumen oder vom Messgasvolumen zum Messgasreservoir gepumpt werden. Dabei wird die Stromstärke des elektrischen Pumpstroms so geregelt, dass sich im Messspalt eine bestimmte, feste Konzentration des Messgasbestandteils einstellt, die mit einer Nernstzelle gemessen wird. Die Stromstärke des elektrischen Pumpstroms ist dann ein Maß für die Konzentration des Messgasbestandteils im Messgasreservoir.

Diese Stromstärke wird einerseits durch eine Pumpstromregelung vorgegeben, und sie kann andererseits auch gemessen werden. Beides ist mit Ungenauigkeiten behaftet. So erfolgt die Vorgabe zum Beispiel durch Ansteuern einer Digital-Analog-Stromquelle mit einem digitalen Pumpstromstellwert, der mit begrenzter Genauigkeit zur Ausgabe eines realen, analogen elektrischen Pumpstroms führt. Die Messung des realen, analogen elektrischen Pumpstroms mit einem Analog-Digital-Konverter ist ebenfalls nur von begrenzter Genauigkeit.

Bisher wird als Messstromwert für den realen elektrischen Pumpstrom im laufenden Betrieb der Breitbandlambdasonde entweder nur ein gemessener Wert oder nur der Pumpstromstellwert verwendet.

Offenbarung der Erfindung

Mit Blick auf ihre Verfahrensaspekte unterscheidet sich die vorliegende Erfindung von dem Stand der Technik durch die kennzeichnenden Merkmale des Anspruchs 1, also dadurch, dass der Messstromwert im Betrieb der Breitband-Lambdasonde wahlweise umschaltbar als Funktion des Pumpstromstellwerts oder als Funktion des Pumpstrommesswerts bestimmt wird.

Ein Vorteil der Strommessung ist eine hohe Genauigkeit im oberen Messbereich, d.h. bei größeren elektrischen Pumpströmen. Nachteilig ist eine höhere Ungenauigkeit sowie Störempfindlichkeit bei kleinen Pumpströmen.

Ein Vorteil der Verwendung des Pumpstromstellwertes als Messstromwert ist dagegen, dass insbesondere kleine Ströme relativ präzise und störunempfindlich eingestellt werden können und daher als recht genauer Messstromwert verwendet werden können.

Die Erfindung basiert auf dem neuen Ansatz, die Vorteile beider Arten der Messstrombestimmung zu nutzen. Insbesondere neu an diesem Ansatz ist, dass die Entscheidung darüber, welcher Wert verwendet wird, im laufenden Betrieb für jeden Messpunkt einzeln entscheidbar ist. Die Entscheidung erfolgt anhand des Pumpstromstellwerts. Bei kleinen Strommesswerten werden die Strommesswerte als Funktion der Pumpstromstellwerte bestimmt, und bei größeren Pumpstromstellwerten werden die Strommesswerte als Funktion gemessener Pumpströme bestimmt.

Die Kombination der beiden Arten der Bestimmung des Messstromwertes hat folgenden weiteren Vorteil: Zu jedem Pumpstromstellwert ist ein zugehöriger Strommesswert verfügbar. Die jeweiligen "Einzel"-Prinzipien des Strom-Stellens und des Strom-Messens haben den Nachteil, dass Nebenschlüsse nach z.B. Fahrzeugmasse am jeweiligen Pumpstrompin bzw. Strommesspin nicht erkannt werden können.

In der Kombination wird eine solche Erkennung möglich. Dadurch wird im Betrieb messbereichsabhängig immer der Wert von zwei möglichen Werten als Messstromwert verwendet, der mit der größeren Genauigkeit bestimmbar ist.

Eine bevorzugte Ausgestaltung zeichnet sich dadurch aus, dass die Funktion die Identität ist, so dass der Messstromwert im Betrieb der Breitband-Lambdasonde wahlweise umschaltbar als der Pumpstromstellwert oder als der Pumpstrommesswert bestimmt wird.

Bevorzugt ist auch, dass der Pumpstromstellwert mit einem Pumpstromstellwertschwellenwert verglichen wird, und dass der Pumpstromstellwert als Messstromwert bestimmt wird, wenn der Pumpstromstellwert kleiner als der Pumpstromstellwertschwellenwert ist, und dass der Pumpstrommesswert als Messstromwert bestimmt wird, wenn der Pumpstromstellwert größer als der Pumpstromstellwertschwellenwert ist.

Weiter ist bevorzugt, dass die Funktion eine Mittelwertbildung ist, bei der eine mittlere Abweichung des Pumpstrommesswertes von dem Pumpstromstellwert gebildet wird und dass die mittlere Abweichung dann, wenn der Messstromwert als der Pumpstromstellwert gebildet wird, von dem Pumpstromstellwert subtrahiert wird und dass der Messstromwert als das Ergebnis der Subtraktion bestimmt wird.

Eine weitere bevorzugte Ausgestaltung zeichnet sich dadurch aus, dass der Pumpstrommesswert mit einem Analog-Digital-Konverter in einen digitalen Pumpstrommesswert umgewandelt wird und dass der Messstromwert in einer Betriebsphase des Breitband-Lambdasensors, in dem der Analog-Digital-Konverter kalibriert wird, als der Pumpstromstellwert bestimmt wird.

Bevorzugt ist auch, dass beim Beginn einer Betriebsphase der Breitband-Lambdasonde Nebenschlüsse an der Pumpelektrode (d.h. am Pumpstrompin) und an der Gegenelektrode (d.h. am Strommesspin) einzeln ermittelt werden und miteinander verglichen werden, um den dominanten Nebenschluss zu identifizieren, und dass dann, wenn der Nebenschluss an der Pumpelektrode dominant ist, eine mittlere Abweichung des Pumpstrommesswertes von dem Pumpstromstellwert gebildet wird und dass die mittlere Abweichung dann, wenn der Messstromwert als der Pumpstromstellwert gebildet wird, von dem Pumpstromstellwert subtrahiert wird und dass der Messstromwert als das Ergebnis der Subtraktion bestimmt wird.

Weiter ist bevorzugt, dass beim Beginn einer Betriebsphase der Breitband-Lambdasonde Nebenschlüsse an der Pumpelektrode und an der Gegenelektrode einzeln ermittelt werden und verglichen werden um den dominanten Nebenschluss zu identifizieren und dass dann, wenn der Nebenschluss an der Gegenelektrode dominant ist, eine mittlere Abweichung des Pumpstrommesswertes von dem Pumpstromstellwert gebildet wird und dass die mittlere Abweichung dann, wenn der Messstromwert als Funktion des Pumpstromstellwerts gebildet wird, zu dem Pumpstromstellwert addiert wird und dass der Messstromwert als das Ergebnis der Addition bestimmt wird.

Eine weitere bevorzugte Ausgestaltung zeichnet sich dadurch aus, dass die ermittelte Abweichung mit einem Abweichungsschwellenwert verglichen wird und dass dann, wenn die Abweichung größer als der Abweichungsschwellenwert ist, eine Fehlerreaktion ausgelöst wird.

Bevorzugt ist auch, dass die Abweichung jeweils als Abweichung eines Pumpstrommesswertes von einem parallel zur Erfassung des Pumpstrommesswertes ausgegebenen Pumpstromstellwert gebildet wird und dass der Abweichungsschwellenwert ein erster Abweichungsschwellenwert ist.

Weiter ist bevorzugt, dass die Abweichung jeweils als Abweichung eines gemittelten Pumpstrommesswertes von einem parallel dazu gemittelten Pumpstrommesswert gebildet wird und der Abweichungsschwellenwert ein zweiter Abweichungsschwellenwert ist, der kleiner als der erste Abweichungsschwellenwert ist.

Mit Blick auf Vorrichtungsaspekte ist bevorzugt, dass das Steuergerät dazu eingerichtet ist, in Verbindung mit einer Breitband-Lambdasonde die bevorzugten Ausgestaltungen des Verfahrens durchzuführen.

Ein Vorteil der Erfindung liegt auch darin, dass Hardware-Komponenten in Form von z.B. Kraftfahrzeugsteuergeräten ohne Änderungen der Hardware zur Verfügung stehen, so dass keine Mehrkosten entstehen. Auch in der Software stehen sowohl Pumpstrommesswert als auch Pumpstromstellwerte bereits zur Verfügung. Es bedarf lediglich einer zusätzlichen Software-Schwellenwertauswertung mit der entschieden wird, ob der Pumpstromstellwert oder eine gemessener Pumpstromwert für die weitere Verarbeitung verwendet wird.

Weitere Vorteile ergeben sich aus der nachfolgenden Beschreibung, den Zeichnungen und den Unteransprüchen. Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in den Zeichnungen dargestellt und werden in der nachfolgenden Beschreibung näher erläutert.

Dabei zeigen, jeweils in schematischer Form:

Figur 1    ein sowohl Verfahrensaspekte als auch Vorrichtungsaspekte veranschaulichendes Blockschaltbild als Ausführungsbeispiel der Erfindung;

Figur 2    eine Abwandlung des Ausführungsbeispiels aus der Figur 1, mit der unerwünschte Einflüsse eines Nebenschlusses der Pumpelektrode und/oder der Gegenelektrode nach Masse verringerbar sind;

Figur 3    eine weitere Abwandlung, die auf einer Optimierung für einen Korrektur entweder eines Nebenschlusses an einer Pumpelektrode oder eines Nebenschlusses an einer Gegenelektrode basiert; und

Figur 4    eine Abwandlung, bei der ab einer bestimmten Fehlergröße zusätzlich eine Fehlermel-

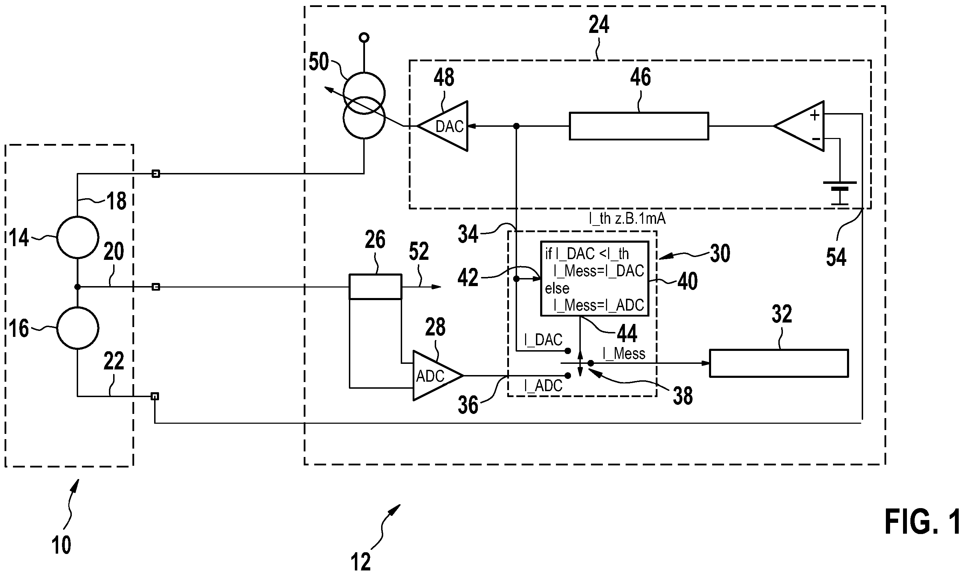

Figur 1 zeigt im Einzelnen eine Breitbandlambdasonde 10 und ein Steuergerät 12. Die Breitbandlambdasonde 10 weist eine Pumpzelle 14 und eine Nernstzelle 16 auf. Die Pumpzelle 14 weist eine dem Messgas auszusetzende Pumpelektrode 18, und eine in einer Messkammer/einem Messspalt angeordnete Gegenelektrode 20 auf. Die Nernstzelle 16 weist eine einer Referenzatmosphäre (zum Beispiel Luft) auszusetzende Referenzelektrode 22 und eine in der Messkammer angeordnete Gegenelektrode 20 auf. Die Gegenelektroden 20 sind identisch oder zumindest elektrisch leitfähig miteinander verbunden.

Das Steuergerät 12 weist eine Stromquellensteuerschaltung 24, einen Messwiderstand 26 einen Analog-Digital-Konverter 28, einen Messwertumschalter 30 und wenigstens einen Messwertnutzer 32 auf.

Der Messwertnutzer 32 repräsentiert zum Beispiel einen Lambdaregelkreis, mit dem ein Kraftstoff/Luft-Verhältnis eines Verbrennungsmotors regelbar ist.

Der Messwertumschalter 30 weist einen Eingang 34 für den Pumpstromstellwert und einen Eingang 36 für den Pumpstrommesswert, einen Schalter 38 und eine Schaltersteuerung 40 auf. Die Schaltersteuerung 40 weist einen Eingang 42 für den Pumpstromstellwert und einen Ausgang 44 für ein Schaltersteuerungssignal auf. Mit dem Schaltersteuerungssignal kann der Schalter 38 zwischen einer ersten Schalterstellung und einer zweiten Schalterstellung umgeschaltet werden. Je nach Schalterstellung wird dem Messwertnutzer 32 entweder der Pumpstromstellwert I_DAC oder der Pumpstrommesswert I_ADC zugeführt.

Wenn der Pumpstromstellwert kleiner als ein vorbestimmter Schwellenwert ist, wird der Pumpstromstellwert I_DAC als Messstromwert I_Mess verwendet. Wenn der Pumpstromstellwert nicht kleiner als ein vorbestimmter Schwellenwert ist, wird der Pumpstrommesswert I_ADC als Messstromwert I_Mess verwendet.

Die Stromquellensteuerschaltung 24 weist eine Pumpstromregelschaltung 46, einen Digital-Analog-Konverter 48 und eine von diesem steuerbare Stromquelle 50 auf. Ein Ausgang der steuerbaren Stromquelle 50 ist mit der Pumpelektrode 18 verbunden.

Die Gegenelektrode 20 der Breitbandlambdasonde 10 ist über den Messwiderstand 26 mit einer virtuellen Masse 52 des Steuergeräts 12 verbunden. Die Pumpstromregelschaltung 46 weist einen Eingang 54 auf, der mit der Referenzelektrode 22 verbunden ist. Die Stromquellensteuerschaltung 24 ist dazu eingerichtet, die digital steuerbare Stromquelle 50 mit einem Pumpstromstellwert I_DAC so anzusteuern, dass diese einen Pumpstrom ausgibt, mit dem die Konzentration eines Messgasbestandteils (insbesondere Sauerstoff) in der Messkammer/dem Messspalt eingestellt wird. Die einzustellende Konzentration entspricht bevorzugt einem Lambdawert gleich 1.

Das folgende Beispiel veranschaulicht Vorteile der Erfindung. Ein typischer Wertebereich für Pumpströme von Breitbandlambdasonden 10 erstreckt sich von Null mA bis - 10 mA.

Realistisch ist z.B. ein Digital-Analog-Konverter 48, der eine Stromgenauigkeit mit einem relativen Fehler von 2% und zusätzlich einen absoluten Fehler von z.B. 2μA aufweist.

Ein guter Analog-Digital-Konverter 28 hat bei einem regelmäßig erfolgenden Abgleich z.B. einen verbleibenden relativen Fehler von 0,1% und einen zusätzlich verbleibenden absoluten Fehler von 2mV/100 Ohm = 20μA (0,1% Restfehler bezogen auf eine max. ADC Spannung von z.B. 2V und einen 100Ohm Messwiderstand).

Bei einem Stromwert von z.B. 100μA kann der Pumpstromstellwert I_DAC einen Fehler von 4μA (4%) haben, während der Pumpstrommesswert I_ADC mit 20μA (20%) einen deutlich größeren Fehler als der Pumpstromstellwert haben kann. Hier wird also das Verwenden des Pumpstromstellwerts als Messstromwert eine deutlich bessere Genauigkeit liefern.

Bei einem Stromwert von z.B. 4mA kann der Pumpstromstellwert einen Fehler von 82μA (ca. 2%) haben, der Pumpstrommesswert kann jetzt mit 24μA (0,6%) einen deutlich kleineren Fehler als der Pumpstromstellwert haben. Hier wird im Gegenteil zu oben das Verwenden des Pumpstrommesswerts eine deutlich bessere Genauigkeit liefern.

Bei kleineren Werten ist also der Pumpstromstellwert der bessere Messstromwert. Bei größeren Werten ist der gemessene Pumpstrommesswert der bessere Messstromwert. Bei ca. 1mA sind der Pumpstromstellwert und der gemessene Pumpstrommesswert in Bezug auf ihre Genauigkeit miteinander vergleichbar. Sie weisen bei dieser Stromstärke eine gleichgroße Genauigkeit auf. Die Schwelle für die Entscheidung welcher Wert als Messstromwert der Breitbandlambdasonde 10 verwendet wird, beträgt daher vorteilhaftweise 1mA, bzw. liegt zwischen 0,5mA und 2 mA.

Der Pumpstromstellwert I_DAC wird dem Messwertumschalter 30 zugeführt. Parallel dazu wird dem Messwertumschalter 30 das Ausgangssignal I_ADC des Analog-Digital-Konverters 28, also der Pumpstrommesswert zugeführt. Der Messwertumschalter 30 vergleicht den Pumpstromstellwert I_DAC mit einem vorbestimmten Pumpstromstellwertschwellenwert.

Wenn der Pumpstromstellwert I_DAC kleiner als der Pumpstromstellwertschwellenwert ist, wird der Pumpstromstellwert I_DAC als Messstromwert bestimmt und an den Messwertnutzer 32 ausgegeben.

Wenn der Pumpstromstellwert I_DAC größer als der Pumpstromstellwertschwellenwert ist, wird der Pumpstrommesswert I_ADC als Messstromwert bestimmt und an den Messwertnutzer 32 ausgegeben.

Üblicherweise ist die Pumpstromquelle 50, wie es in der Figur 1 dargestellt ist, an die Pumpelektrode 18 der Breitbandlambdasonde angeschlossen. Gibt es einen Nebenschluss z.B. nach Fahrzeug-Masse an diesem Anschluss, so entsteht dann ein zusätzlicher Fehler, wenn der Pumpstromstellwert als Messwert verwendet wird. Der Fehler entsteht dadurch, dass der von der Pumpstromquelle ausgegebene Pumpstrom dann zum Teil über den Nebenschlusswiderstand abfließt.

Die Fehlerströme können ohne den laufenden Betrieb unterbrechen zu müssen durch eine Differenzbildung aus Pumpstromstellwert I_DAC und gemessenem Pumpstrom I_ADC bestimmt werden. Dabei können kleine Abweichungen korrigiert werden, und große Abweichungen können als Fehler bewertet werden und zur Auslösung einer Fehlerreaktion, bspw. der Anzeige und/oder Abspeicherung einer Fehlermeldung verwendet werden.

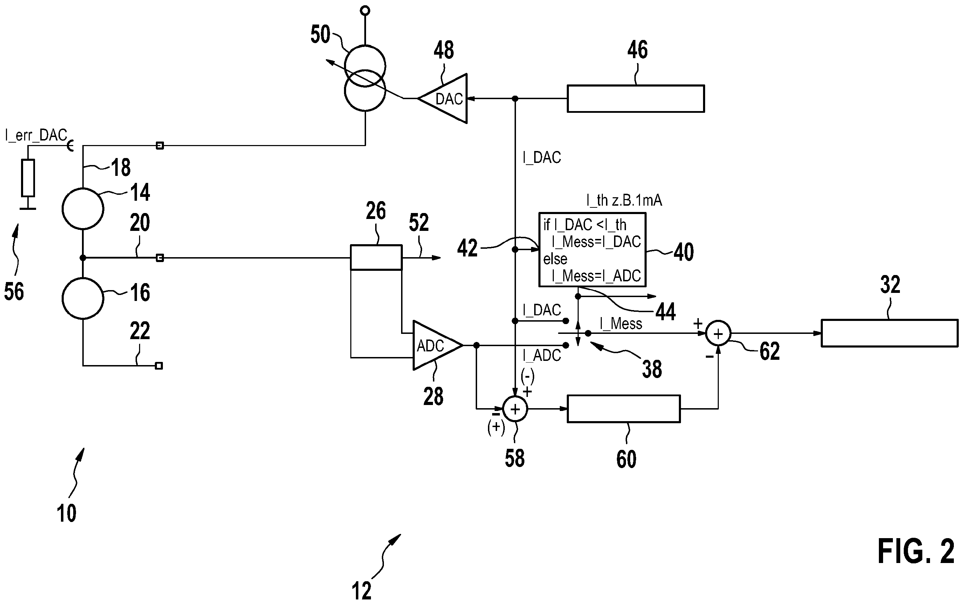

Figur 2 zeigt, wie zunächst eine Korrektur für den Fall kleiner Abweichungen durchgeführt werden kann.

Dabei wird zunächst der Fall eines hochohmigen Nebenschlusses 56 zur Fahrzeug-Masse mit ca. 30μA Fehlerstrom betrachtet. Solche Nebenschlüsse kommen bei manchen Breitbandlambdasonden-Typen speziell am Anschluss der Pumpstromelektrode 18 vor.

Da bei kleinen Pumpströmen das bis hier vorgestellte neue Konzept den Pumpstromstellwert I_DAC als Messstromwert verwenden würde, wäre dieser Messstromwert mit einem zusätzlichen Fehler von 30μA behaftet. Ebenso gilt dies dann, wenn nur, also ohne erfindungsgemäße Umschaltung, mit einer Verwendung des Pumpstromstellwerts als Messstromwert, also als Eingangsgröße für den Messwertnutzer gearbeitet wird.

Weiter oben wurde bereits beschrieben, dass der Analog-Digital-Konverter 28 in diesem Bereich nicht unbedingt sonderlich präzise arbeitet. Daher würde eine direkte Korrektur um die Sollwert-Messwert-Differenz hier nur geringfügig helfen. Allerdings lassen sich Fehler des Analog-Digital-Konverters 28 weiter reduzieren, wenn das Messsignal über einen längeren Zeitraum gemittelt bzw. gefiltert wird.

Daraus ergibt sich folgender neuer Zusatz: Die Pumpstromstellwerte I_DAC und Pumpstrommesswerte I_ADC werden über jeweils eigene Pfade auf gleiche Art gemittelt bzw. gefiltert, und dann wird die Differenz der Werte gebildet. Die Differenzbildung erfolgt in Figur 2 in der Verknüpfung 58. Die genannte Filterung erfolgt jeweils in den Pfaden, die unmittelbar in der Verknüpfung 58 münden. Diese Filterungen sind in der Figur 2 nicht explizit dargestellt. Alternativ wird zuerst in einer Verknüpfung 58 die Differenz gebildet, und diese wird dann in einem Mittelwertbildungsblock 60 gemittelt bzw. gefiltert. Beide Alternativen der Mittelwert- und Differenzbildung sind mathematisch äquivalent. Die zuletzt genannte Ausgestaltung ist in der Figur 2 dargestellt. Dort wird zunächst in der Verknüpfung 58 eine Abweichung des Pumpstromstellwertes I_DAC vom parallel zur Ausgabe des Pumpstromstellwertes I_DAC gemessenen Pumpstrommesswertes I_ADC gebildet.

Anschließend wird die Abweichung in einem Mittelwertbildungsblock 60 gemittelt. Der Mittelwert der Abweichung wird anschließend in einer Verknüpfung 62 von einem aktuellen Pumpstromstellwert I_DAC subtrahiert. Das Ergebnis der Subtraktion wird als (korrigierter) Messstromwert bestimmt und an den Messwertnutzer 32 übergeben. Die Subtraktion des Ausgangswertes des Blockes 60 im Block 62 erfolgt nur dann, wenn der Verknüpfung 62 der Pumpstromstellwert I_DAC als Messstromwert zugeführt wird. Wenn der Verknüpfung 62 der Pumpstromesswert I_ADC als Messstromwert zugeführt wird, soll dieser ohne Subtraktion der Abweichung dem Messwertnutzer 32 zugeführt werden.

Bei beiden Alternativen werden Ungenauigkeiten, die durch Rauschen oder Störfrequenzen bedingt sind, entfernt, und die Genauigkeit der gebildeten Differenz wird erhöht. Diese Differenz wird (in der Verknüpfung 62) vom aktuellen Stellwert subtrahiert. Man könnte sich fragen warum dann nicht immer z.B. ausschließlich mit gefilterten Messwerten gearbeitet wird. Dies liegt daran, dass die Filterung bzw. Mittelung Zeit benötigt, die nicht unbedingt zur Verfügung steht. Ein besonderer Vorteil der mit der Mittelung arbeitenden Ausgestaltung besteht darin, dass ein gegenüber Störungen unempfindlicher und genauer Messstromwert schnell verfügbar ist, obwohl man sich für die Ermittlung eines genauen, gemittelten oder gefilterten Korrekturwerts viel Zeit nimmt. Die Ermittlung des Korrekturwerts kann parallel zum laufenden Betrieb erfolgen ohne zeitliche Einschränkungen in Kauf nehmen zu müssen.

Die an der Verknüpfung 58 ohne Klammern dargestellten Operatoren "+" und "-" repräsentieren eine Korrektur eines Nebenschlusses am Anschluss der Pumpelektrode 18.

Die beiden dort in Klammern dargestellten Operatoren "(+)" und "(-)" repräsentieren eine (theoretische) Korrektur für einen Nebenschluss am Anschluss der Gegenelektrode 20.

Bei den genannten Breitbandlambdasonden 10, bei denen hochohmige Nebenschlüsse zur Fahrzeug-Masse an der Pumpelektrode 18 oder der Gegenelektrode 20 auftreten, dominiert in der Regel der Nebenschluss 56 an der Pumpelektrode 18. Bei der bis hier beschriebenen Korrekturfunktion wird nur ein Nebenschluss am Pumpelektrodenanschluss korrigiert. Ein Nebenschluss am Gegenelektrodenanschluss kann nicht von dem Nebenschluss am Pumpelektrodenanschluss unterschieden werden.

Daher kann mit dieser neuen Funktion ein Nebenschluss an der Gegenelektrode 20 ohne Zusatzmaßnahmen genauso wenig korrigiert werden wie bei dem bisher bekannten Verfahren, das (nur) mit einer Messung des Pumpstroms I_ADC arbeitet. Das erfindungsgemäße Verfahren ist diesbezüglich aber auch nicht schlechter als das bekannte Verfahren und resultiert in identischer Fehlertoleranz bezüglich eines an der Gegenelektrode 20 auftretenden Nebenschlusses (systematisch allerdings mit invertierter Polarität), hat aber den Vorteil, einen Nebenschluss 56 an der Pumpelektrode 18 zu korrigieren.

Es gibt aber auch Breitbandlambdasonden 10 ohne diesen "dominanten" Nebenschluss 56. Bei diesen Breitbandlambdasonden 10 können kleinere Nebenschlüsse auch an dem Anschluss der Gegenelektrode 56 auftreten. Bei dem bekannten Verfahren werden diese Nebenschlüsse nicht erfasst und erzeugen einen Messfehler.

Mit der folgenden optional zusätzlichen Ausgestaltung können entweder Nebenschlüsse an der Pumpstromelektrode 18 oder an der Gegenelektrode 20 korrigiert werden.

Bei einer weiteren Ausgestaltung werden zunächst während des System-Hochlaufs die Nebenschlüsse am Anschluss der Pumpelektrode 18 und am Anschluss der Gegenelektrode 20 einzeln ermittelt. Dies wird als bekannt vorausgesetzt. Neu ist, dass diese Nebenschlüsse beim Hochlauf verglichen werden, um den jeweils dominanten Nebenschluss zu identifizieren. Ist ein Nebenschluss an der Pumpelektrode 18 dominant, wird wie oben beschrieben verfahren. Ist dagegen ein Nebenschluss am Anschluss der Gegenelektrode 20 besonders dominant, wird ein der Verknüpfung 62 zugeführter Korrekturwert nicht subtrahiert, sondern addiert.

Dadurch wird die Korrekturfunktion für den größeren der beiden Fehler verwendet. Der kleinere Fehler wirkt dagegen wie bereits oben beschrieben unverändert. Auch wenn sich die Nebenschlüsse zur Laufzeit verändern und der andere Fehler an "Dominanz" gewinnt, wird auf jeden Fall wenigstens einer von beiden Fehlern korrigiert. Vorteil und neu ist also, dass die Korrekturmöglichkeit zumindest einen von beiden Fehlern behebt und damit eine verbesserte Messgenauigkeit erzielt. Vorteilhaft ist auch, dass bei jedem Fahrzyklus eine neue Optimierung auf den dominanten Fehler erfolgt.

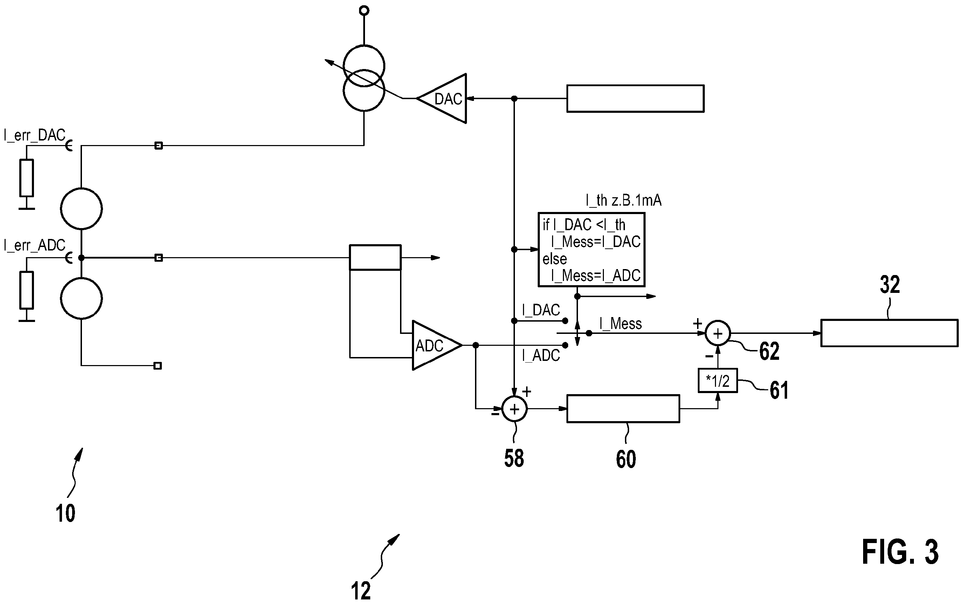

Figur 3 veranschaulicht eine Korrektur für Nebenschlüsse sowohl am Anschluss der Pumpelektrode 18 als auch am Anschluss der Gegenelektrode 20. Diese Ausgestaltung könnte für Breitbandlambdasonden 10 verwendet werden, bei denen beide Nebenschluss-Fehler in die gleiche Richtung wirken. Gleiche Richtung heißt, dass z.B. an beiden Anschlüssen 18, 20 die im Normalbetrieb zu korrigierenden Nebenschlüsse z.B. nach Fahrzeugmasse auftreten, nicht aber in einer Weise gemischt, bei der an einem Anschluss ein Nebenschluss zur Masse auftritt, während an dem anderen Anschluss ein Nebenschluss zur Versorgungsspannung auftritt. Diese Voraussetzung gilt für den Normalbetrieb mit noch akzeptablen Nebenschlüssen.

Eine "Spezialisierung" bzw. "Optimierung" auf einen Nebenschluss an der Pumpelektrode 18, bzw. auf einen Nebenschluss an der Gegenelektrode 20 ist nicht erforderlich. Unerwünschte Wirkungen beider Nebenschlüsse werden gleichermaßen verbessert. Ein Nachteil dieser Ausgestaltung im Vergleich zu den weiter vorn dargestellten Ausgestaltungen besteht darin, dass die jeweiligen Nebenschluss-Fehler dabei allerdings nicht unbedingt vollständig korrigiert werden.

Wie beim Gegenstand der Figur 2 werden die Pumpstromstellwerte I_DAC und Pumpstrommesswerte I_ADC auch beim Gegenstand der Figur 3 über jeweils eigene Pfade auf gleiche Art gemittelt bzw. gefiltert, und dann wird die Differenz der Werte gebildet. Dies erfolgt bevorzugt so, wie es unter Bezug auf die Figur 2 erläutert worden ist. Zum Beispiel wird zuerst in einer Verknüpfung 58 die Differenz gebildet und diese dann in einem Mittelwertbildungsblock 60 gemittelt bzw. gefiltert. Beide Alternativen der Mittelwert- und Differenzbildung sind mathematisch äquivalent. Die zuletzt genannte Ausgestaltung ist in der Figur 3 dargestellt. Dort wird zunächst in der Verknüpfung 58 eine Abweichung des Pumpstromstellwertes I_DAC vom parallel zur Ausgabe des Pumpstromstellwertes I_DAC gemessenen Pumpstrommesswertes I_ADC gebildet.

Anschließend wird die Abweichung in einem Mittelwertbildungsblock 60 gemittelt. Der Mittelwert der Abweichung wird anschließend in einem Halbierungsblock 61 halbiert und dann in der Verknüpfung 62 von einem aktuellen Pumpstromstellwert I_DAC subtrahiert. Das Ergebnis der Subtraktion wird als (korrigierter) Messstromwert bestimmt und an den Messwertnutzer 32 übergeben. Auch hier gilt, dass die Subtraktion des Ausgangswertes des Blockes 60 im Block 62 nur dann erfolgt, wenn der Verknüpfung 62 der Pumpstromstellwert I_DAC als Messstromwert zugeführt wird. Wenn der Verknüpfung 62 der Pumpstrommesswert I_ADC als Messstromwert zugeführt wird, soll dieser ohne Subtraktion der Abweichung dem Messwertnutzer 32 zugeführt werden.

Der verbleibende Fehler kann dabei wie folgt berechnet werden:

$$\text{Restfehler} = \frac{1}{2} * (I\_err\_DAC - I\_err\_ADC)$$

I_err_DAC und I_err_ADC sind die Fehlerströme, die sich als Folge eines Nebenschlusses am Anschluss der Pumpelektrode 18 und am Anschluss 20 der Gegenelektrode ergeben.

Der Restfehler-Formel entnimmt man, dass der Restfehler insbesondere dann klein wird, wenn beide Nebenschluss-Ströme in die gleiche Richtung fließen, zum Beispiel nach Fahrzeug-Masse. In diesem Fall subtrahieren sich die Restfehler. Bei Nebenschlüssen ähnlicher Größe an beiden Sonden-Anschlüssen kann der Restfehler dadurch sogar vollständig verschwinden. Gibt es Nebenschluss nur an einem Pin, wird der dadurch bedingte Fehler immerhin halbiert. Gibt es einen ähnlichen Fehler an beiden Pins, werden die Fehler nahezu vollständig korrigiert.

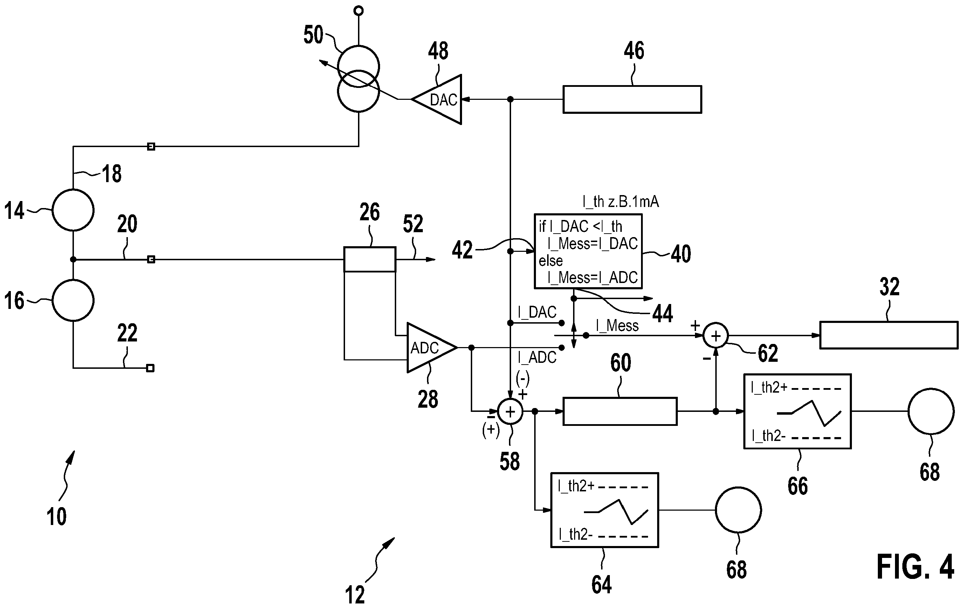

Üblicherweise treten akzeptierbare Nebenschlüsse im Normalbetrieb hauptsächlich nach Fahrzeug-Masse auf. Daher ist die Voraussetzung für eine günstige Anwendung dieses Verfahrens im Normalbetrieb üblicherweise gegeben. Nebenschlüsse nach einer Versorgungsspannung sind eher unüblich und deuten auf einen Fehler hin, der mit Verfahren detektiert werden kann, die im Folgenden unter Bezug auf die Figur 4 erläutert werden.

Wie bei der Nebenschlusskorrektur nach Figur 2 und 3 wird auch beim Gegenstand der Figur 4 in der Verknüpfung 58 die Differenz aus Pumpstromstellwert I_DAC und Pumpstrommesswert I_ADC gebildet. Überschreitet die Differenz einen bestimmten positiven Wert I_th1+, oder unterschreitet sie einen bestimmten negativen Wert I_th-, wird dies nicht mehr als erlaubter Nebenschluss betrachtet, der z.B. vollständig korrigiert werden kann. Stattdessen wird oberhalb des positiven Schwellenwerts und unterhalb des negativen Schwellenwerts zusätzlich eine Fehlerreaktion ausgelöst.

Für diese Fehlererkennung kann unmittelbar eine in der Verknüpfung 58 Messpunkt für Messpunkt gebildete Differenz von Pumpstromstellwert I_DAC und Pumpstrommesswert I_ADC bewertet werden. Dies wird durch den Block 64 repräsentiert, der für einen Vergleich der Differenz mit einem unteren Schwellenwert und einem oberen Schwellenwert steht.

Alternativ kann aber auch die oben genannte gemittelte bzw. gefilterte Differenz bewertet werden und damit eine höhere Störunempfindlichkeit erreicht werden. Dies wird durch den Block 66 repräsentiert, der für einen Vergleich der gemittelten Differenz mit einem unteren Schwellenwert I_th2- und einem oberen Schwellenwert I_th2+ steht. Ebenso kann beides kombiniert werden, so dass z.B. eine höhere "Momentanwert"-Fehlerschwelle definiert wird, die eine schnelle Fehlerreaktion auslöst, sowie eine tiefere Fehlerschwelle für die gefilterte oder gemittelte Differenz, die aber eine verzögerte Fehlerreaktion auslöst. Die Fehlerreaktion kann zum Beispiel zu einer Speicherung einer Fehlermeldung in einem Fehlerspeicher des Steuergeräts und/oder, ggf. nach statistischer Absicherung, zur Aktivierung einer z.B. optischen Fehleranzeige 68 führen.

**Patentansprüche**

1. Verfahren zum Bestimmen eines Messstromwertes (I_Mess) einer Breitband-Lambdasonde (10), die eine Nernstzelle (16) und eine Pumpzelle (14) aufweist, wobei eine sich über der Nernstzelle (16) einstellende Potenzialdifferenz erfasst und von einer Pumpstrom-Regelschaltung (46) zu einem Pumpstromstellwert (I_DAC) verarbeitet wird, aus dem eine steuerbare Stromquelle (50) einen realen Pumpstrom erzeugt, der der Pumpzelle (14) an einer Pumpelektrode (18) zugeführt wird, und wobei ein Messwert des aus einer Gegenelektrode (20) der Pumpzelle (14) herausfließenden elektrischen Stroms als ein Pumpstrommesswert (I_ADC) erfasst wird, **dadurch gekennzeichnet, dass** der Messstromwert (I_Mess) im Betrieb der Breitband-Lambdasonde (10) wahlweise umschaltbar als Funktion des Pumpstromstellwerts (I_DAC) oder als Funktion des Pumpstrommesswerts (I_ADC) bestimmt wird.

2. Verfahren nach Anspruch 1, **dadurch gekennzeichnet, dass** die Funktion die Identität ist, so dass der Messstromwert (I_ADC) im Betrieb der Breitband-Lambdasonde (10) wahlweise umschaltbar als der Pumpstromstellwert (I_DAC) oder als der Pumpstrommesswert (I_ADC) bestimmt wird.

3. Verfahren nach Anspruch 1 oder 2, **dadurch gekennzeichnet, dass** der Pumpstromstellwert (I_DAC) mit einem Pumpstromstellwertschwellenwert verglichen wird, und dass der Pumpstromstellwert (I_DAC) als Messstromwert (I_Mess) bestimmt wird, wenn der Pumpstromstellwert (I_DAC) kleiner als der Pumpstromstellwertschwellenwert ist, und dass der Pumpstrommesswert (I_ADC) als Messstromwert (I_Mess) bestimmt wird, wenn der Pumpstromstellwert (I_DAC) größer als der Pumpstromstellwertschwellenwert ist.

4. Verfahren nach Anspruch 1, **dadurch gekennzeichnet, dass** die Funktion eine Mittelwertbildung (60) ist, bei der eine mittlere Abweichung des Pumpstrommesswertes (I_ADC) von dem Pumpstromstellwert (I_DAC) gebildet wird und dass die mittlere Abweichung dann, wenn der Messstromwert (I_Mess) als der Pumpstromstellwert (I_DAC) gebildet wird, von dem Pumpstromstellwert (I_DAC) subtrahiert wird und dass der Messstromwert (I_Mess) als das Ergebnis der Subtraktion (62) bestimmt wird.

5. Verfahren nach Anspruch 1, **dadurch gekennzeichnet, dass** der Pumpstrommesswert mit einem Analog-Digital-Konverter (28) in einen digitalen Pumpstrommesswert (I_ADC) umgewandelt wird und dass der Messstromwert (I_Mess) in einer Betriebsphase des Breitband-Lambdasensors (10), in dem der Analog-Digital-Konverter (28) kalibriert wird, als der Pumpstromstellwert (I_DAC) bestimmt wird.

6. Verfahren nach Anspruch 1, **dadurch gekennzeichnet, dass** beim Beginn einer Betriebsphase der Breitband-Lambdasonde (10) Nebenschlüsse an der Pumpelektrode (18) und an der Gegenelektrode (20) einzeln ermittelt werden und miteinander verglichen werden, um den dominanten Nebenschluss zu identifizieren, und dass dann, wenn der Nebenschluss an der Pumpelektrode dominant ist, eine mittlere Abweichung des Pumpstrommesswertes (I_ADC) von dem Pumpstromstellwert (I_DAC) gebildet wird und dass die mittlere Abweichung dann, wenn der Messstromwert (I_Mess) als der Pumpstromstellwert (I_DAC) gebildet wird, von dem Pumpstromstellwert (I_DAC) subtrahiert wird und dass der Messstromwert (I-Mess) als das Ergebnis der Subtraktion (62) bestimmt wird.

7. Verfahren nach Anspruch 1, **dadurch gekennzeichnet, dass** beim Beginn einer Betriebsphase der Breitband-Lambdasonde (10) Nebenschlüsse an der Pumpelektrode und an der Gegenelektrode einzeln ermittelt werden und verglichen werden um den dominanten Nebenschluss zu identifizieren und dass dann, wenn der Nebenschluss an der Gegenelektrode dominant ist, eine mittlere Abweichung des Pumpstrommesswertes (I_ADC) von dem Pumpstromstellwert (I_DAC) gebildet wird und dass die mittlere Abweichung dann, wenn der Messstromwert (I_Mess) als Funktion des Pumpstromstellwerts (I_DAC) gebildet wird, zu dem Pumpstromstellwert (I_DAC) addiert wird und dass der Messstromwert (I_Mess) als das Ergebnis der Addition bestimmt wird.

8. Verfahren nach einem der Ansprüche 6 oder 7, **dadurch gekennzeichnet, dass** die ermittelte Abweichung mit einem Abweichungsschwellenwert verglichen wird und dass dann, wenn die Abweichung größer als der Abweichungsschwellenwert ist, eine Fehlerreaktion ausgelöst wird.

9. Verfahren nach Anspruch 8, **dadurch gekennzeichnet, dass** die Abweichung jeweils als Abweichung eines Pumpstrommesswertes (I_ADC) von einem parallel zur Erfassung des Pumpstrommesswertes (I_ADC) ausgegebenen Pumpstromstellwert (I_DAC) gebildet wird und der Abweichungsschwellenwert ein erster Abweichungsschwellenwert (I_th1+/-) ist.

10. Verfahren nach Anspruch 9, **dadurch gekennzeichnet, dass** die Abweichung jeweils als Abweichung eines gemittelten Pumpstrommesswertes (I_ADC) von einem parallel dazu gemittelten Pumpstromstellwert (I_DAC) gebildet wird und der Abweichungsschwellenwert ein zweiter Abweichungsschwellenwert (I_th2+/-) ist.

11. Steuergerät (12), das zum Betreiben einer Breitband-Lambdasonde (10) eingerichtet ist, die eine Nernstzelle (16) und eine Pumpzelle (14) aufweist, wobei das Steuergerät dazu eingerichtet ist, eine sich über der Nernstzelle (16) einstellende Potenzialdifferenz zu erfassen und mit einer Pumpstrom-Regelschaltung (46) zu einem Pumpstromstellwert (I_DAC) zu verarbeiten, und daraus mit einer steuerbaren Stromquelle (50) einen realen Pumpstrom zu erzeugen, welcher der Pumpzelle (14) an einer Pumpelektrode (18) zuführbar ist, und dabei einen Messwert des aus einer Gegenelektrode (20) der Pumpzelle (14) herausfließenden elektrischen Stroms als einen Pumpstrommesswert (I_ADC) zu erfassen, **dadurch gekennzeichnet, dass** das Steuergerät (12) dazu eingerichtet ist, den Messstromwert (I_Mess) im Betrieb der Breitband-Lambdasonde (10) wahlweise umschaltbar als Funktion des Pumpstromstellwerts (I_DAC) oder als Funktion des Pumpstrommesswerts (I_ADC) zu bestimmen.

12. Steuergerät (12) nach Anspruch 11, wobei das Steuergerät (12) zusätzlich dazu eingerichtet ist, in Verbindung mit einer Breitband-Lambdasonde (10) ein Verfahren nach einem der Ansprüche 2 bis 10 durchzuführen.

**Claims**

1. Method for determining a measurement current value (I_Mess) of a broadband lambda probe (10) having a Nernst cell (16) and a pump cell (14), wherein a potential difference established across the Nernst cell (16) is detected and processed by a pump current control circuit (46) to form a pump current adjustment value (I_DAC), from which a controllable current source (50) generates a real pump current that is fed to the pump cell (14) at a pump electrode (18), and wherein a measurement value of the electric current flowing out from a counterelectrode (20) of the pump cell (14) is detected as a pump current measurement value (I_ADC), **characterized in that** the measurement current value (I_Mess) is determined during operation of the broadband lambda probe (10) optionally switchably as a function of the pump current adjustment value (I_DAC) or as a function of the pump current measurement value (I_ADC).

2. Method according to Claim 1, **characterized in that** the function is the identity function, such that the measurement current value (I_ADC) is determined during operation of the broadband lambda probe (10) optionally switchably as the pump current adjustment value (I_DAC) or as the pump current measurement value (I_ADC).

3. Method according to Claim 1 or 2, **characterized in that** the pump current adjustment value (I_DAC) is compared with a pump current adjustment value threshold value, and **in that** the pump current adjustment value (I_DAC) is determined as measurement current value (I_Mess) if the pump current adjustment value (I_DAC) is less than the pump current adjustment value threshold value, and **in that** the pump current measurement value (I_ADC) is determined as measurement current value (I_Mess) if the pump current adjustment value (I_DAC) is greater than the pump current adjustment value threshold value.

4. Method according to Claim 1, **characterized in that** the function is an averaging (60) in which an average deviation of the pump current measurement value (I_ADC) from the pump current adjustment value (I_DAC) is formed, and **in that** the average deviation when the measurement current value (I_Mess) is formed as the pump current adjustment value (I_DAC) is subtracted from the pump current adjustment value (I_DAC), and **in that** the measurement current value (I_Mess) is determined as the result of the subtraction (62).

5. Method according to Claim 1, **characterized in that** the pump current measurement value is converted into a digital pump current measurement value (I_ADC) by an analogue-to-digital converter (28), and **in that** the measurement current value (I_Mess) is determined as the pump current adjustment value (I_DAC) in an operating phase of the broadband lambda sensor (10) in which the analogue-to-digital converter (28) is calibrated.

6. Method according to Claim 1, **characterized in that** at the beginning of an operating phase of the broadband lambda probe (10), shunts at the pump electrode (18) and at the counterelectrode (20) are ascertained individually and are compared with one another in order to identify the dominant shunt, and **in that** when the shunt at the pump electrode is dominant, an average deviation of the pump current measurement value (I _ADC) from the pump current adjustment value (I_DAC) is formed, and **in that** the average deviation when the measurement current value (I_Mess) is formed as the pump current adjustment value (I_DAC) is subtracted from the pump current adjustment value (I_DAC), and **in that** the measurement current value (I_Mess) is determined as the result of the subtraction (62) .

7. Method according to Claim 1, **characterized in that** at the beginning of an operating phase of the broadband lambda probe (10), shunts at the pump electrode and at the counterelectrode are ascertained individually and are compared in order to identify the dominant shunt, and **in that** when the shunt at the counterelectrode is dominant, an average deviation of the pump current measurement value (I _ADC) from the pump current adjustment value (I_DAC) is formed, and **in that** the average deviation when the measurement current value (I_Mess) is formed as a function of the pump current adjustment value (I_DAC) is added to the pump current adjustment value (I_DAC), and **in that** the measurement current value (I_Mess) is determined as the result of the addition.

8. Method according to either of Claims 6 and 7, **characterized in that** the ascertained deviation is compared with a deviation threshold value, and **in that** an error reaction is triggered when the deviation is greater than the deviation threshold value.

9. Method according to Claim 8, **characterized in that** the deviation is formed in each case as a deviation of a pump current measurement value (I _ADC) from a pump current adjustment value (I_DAC) output in parallel with the detection of the pump current measurement value (I_ADC), and the deviation threshold value is a first deviation threshold value (I_th1+/-).

10. Method according to Claim 9, **characterized in that** the deviation is formed in each case as a deviation of an averaged pump current measurement value (I_ADC) from a pump current adjustment value (I_DAC) averaged in parallel therewith, and the deviation threshold value is a second deviation threshold value (I_th2+/-).

11. Control device (12) configured for operating a broadband lambda probe (10) having a Nernst cell (16) and a pump cell (14), wherein the control device is configured to detect a potential difference established across the Nernst cell (16) and to process it by way of a pump current control circuit (46) to form a pump current adjustment value (I_DAC), and to generate therefrom, by way of a controllable current source (50), a real pump current that is able to be fed to the pump cell (14) at a pump electrode (18), and in the process to detect a measurement value of the electric current flowing out from a counterelectrode (20) of the pump cell (14) as a pump current measurement value (I_ADC), **characterized in that** the control device (12) is configured to determine the measurement current value (I_Mess) during operation of the broadband lambda probe (10) optionally switchably as a function of the pump current adjustment value (I_DAC) or as a function of the pump current measurement value (I_ADC).

12. Control device (12) according to Claim 11, wherein the control device (12) is additionally configured, in conjunction with a broadband lambda probe (10), to carry out a method according to any of Claims 2 to 10.

## Revendications

1. Procédé de détermination d'une valeur de courant de mesure (I_Mess) d'une sonde lambda à large bande (10), qui possède une cellule de Nernst (16) et une cellule de pompage (14), une différence de potentiel qui s'établit aux bornes de la cellule de Nernst (16) étant acquise et transformée par un circuit de régulation (46) de courant de pompage en une valeur de réglage de courant de pompage (I_DAC), à partir de laquelle une source de courant (50) commandable génère un courant de pompage réel, lequel est acheminé à la cellule de pompage (14) au niveau d'une électrode de pompage (18), et une valeur de mesure du courant électrique sortant d'une contre-électrode (20) de la cellule de pompage (14) étant acquise en tant qu'une valeur de mesure du courant de pompage (I_ADC), **caractérisé en ce que** la valeur du courant de mesure (I _Mess) en fonctionnement de la sonde lambda à large bande (10) est déterminée de manière permutable, au choix, en fonction de la valeur de réglage du courant de pompage (I_DAC) ou en fonction de la valeur de mesure du courant de pompage (I_ADC).

2. Procédé selon la revendication 1, **caractérisé en ce que** la fonction est l'identité, de sorte que la valeur du courant de mesure (I _ADC) en fonctionnement de la sonde lambda à largeur bande (10) est déterminée de manière permutable au choix comme étant la valeur de réglage du courant de pompage (I_DAC) ou la valeur de mesure du courant de pompage (I_ADC).

3. Procédé selon la revendication 1 ou 2, **caractérisé en ce que** la valeur de réglage du courant de pompage (I_DAC) est comparée à une valeur de seuil de valeur de réglage du courant de pompage, et **en ce que** la valeur de réglage du courant de pompage (I_DAC) est déterminée comme étant la valeur du courant de mesure (I_Mess) lorsque la valeur de réglage du courant de pompage (I_DAC) est inférieure à la valeur de seuil de valeur de réglage du courant de pompage, et **en ce que** la valeur de mesure du courant de pompage (I_ADC) est déterminée comme étant la valeur de courant de mesure (I_Mess) lorsque la valeur de réglage du courant de pompage (I_DAC) est supérieure à la valeur de seuil de valeur de réglage du courant de pompage.

4. Procédé selon la revendication 1, **caractérisé en ce que** la fonction est un calcul de moyenne (60), avec lequel est calculé un écart moyen entre la valeur de mesure du courant de pompage (I_ADC) et la valeur de réglage du courant de pompage (I_DAC), et **en ce que** lorsque la valeur du courant de mesure (I_Mess) est calculée en tant que la valeur de réglage du courant de pompage (I_DAC), l'écart moyen est soustrait de la valeur de réglage du courant de pompage (I_DAC), et **en ce que** la valeur du courant de mesure (I_Mess) est déterminée comme étant le résultat de la soustraction (62).

5. Procédé selon la revendication 1, **caractérisé en ce que** la valeur de mesure du courant de pompage est convertie par un convertisseur analogique-numérique (28) en une valeur de mesure du courant de pompage (I_ADC) numérique, et **en ce que** la valeur du courant de mesure (I_Mess) dans une phase de fonctionnement de la sonde lambda à large bande (10), dans laquelle le convertisseur analogique-numérique (28) est étalonné, est déterminée comme étant la valeur de réglage du courant de pompage (I_DAC).

6. Procédé selon la revendication 1, **caractérisé en ce qu'**au début d'une phase de fonctionnement de la sonde lambda à large bande (10), des shunts sont déterminés individuellement au niveau de l'électrode de pompage (18) et au niveau de la contre-électrode (20) et sont comparés entre eux afin d'identifier le shunt dominant, et **en ce que** lorsque le shunt au niveau de l'électrode de pompage est dominant, un écart moyen entre la valeur de mesure du courant de pompage (I_ADC) et la valeur de réglage du courant de pompage (I_DAC) est calculé, et **en ce que** lorsque la valeur du courant de mesure (I _Mess) est calculée en tant que la valeur de réglage du courant de pompage (I_DAC), l'écart moyen est soustrait de la valeur de réglage du courant de pompage (I_DAC), et **en ce que** la valeur du courant de mesure (I-Mess) est déterminée comme étant le résultat de la soustraction (62).

7. Procédé selon la revendication 1, **caractérisé en ce qu'**au début d'une phase de fonctionnement de la sonde lambda à large bande (10), des shunts sont déterminés individuellement au niveau de l'électrode de pompage et au niveau de la contre-électrode et sont comparés afin d'identifier le shunt dominant, et **en ce que** lorsque le shunt au niveau de la contre-électrode est dominant, un écart moyen entre la valeur de mesure du courant de pompage (I_ADC) et la valeur de réglage du courant de pompage (I_DAC) est calculé, et **en ce que** lorsque la valeur du courant de mesure (I_Mess) est calculée en tant que fonction de la valeur de réglage du courant de pompage (I_DAC), l'écart moyen est additionné à la valeur de réglage du courant de pompage (I_DAC), et **en ce que** la valeur du courant de mesure (I-Mess) est déterminée comme étant le résultat de l'addition.

8. Procédé selon l'une des revendications 6 et 7, **caractérisé en ce que** l'écart déterminé est comparé à une valeur de seuil d'écart, et **en ce que** lorsque l'écart est supérieur à la valeur de seuil d'écart, une réaction d'erreur est déclenchée.

9. Procédé selon la revendication 8, **caractérisé en ce que** l'écart est chaque foist calculé comme étant l'écart entre une valeur de mesure du courant de pompage (I_ADC) et une valeur de réglage du courant de pompage (I_DAC) émise parallèlement à l'acquisition de la valeur de mesure du courant de pompage (I_ADC), et la valeur de seuil d'écart est une première valeur de seuil d'écart (I _th1+/-).

10. Procédé selon la revendication 9, **caractérisé en ce**

**que** l'écart est chaque fois calculé comme étant l'écart entre une valeur de mesure du courant de pompage (I_ADC) moyenne et une valeur de réglage du courant de pompage (I_DAC) moyenne calculée parallèlement à celle-ci, et la valeur de seuil d'écart est une deuxième valeur de seuil d'écart (I_th2+/-).

11. Dispositif de commande (12) qui est conçu pour faire fonctionner une sonde lambda à large bande (10), laquelle possède une cellule de Nernst (16) et une cellule de pompage (14), le dispositif de commande étant conçu pour acquérir une différence de potentiel qui s'établit aux bornes de la cellule de Nernst (16) et pour la transformer par un circuit de régulation (46) de courant de pompage en une valeur de réglage du courant de pompage (I_DAC), et pour générer à partir de celle-ci un courant de pompage réel avec une source de courant (50) commandable, lequel peut être acheminé à la cellule de pompage (14) au niveau d'une électrode de pompage (18), et acquérir ainsi une valeur de mesure du courant électrique qui sort d'une contre-électrode (20) de la cellule de pompage (14) en tant qu'une valeur de mesure du courant de pompage (I_ADC), **caractérisé en ce que** le dispositif de commande (12) est conçu pour déterminer la valeur de courant de mesure (I_Mess) en fonctionnement de la sonde lambda à large bande (10), de manière permutable, au choix, en fonction de la valeur de réglage du courant de pompage (I_DAC) ou en fonction de la valeur de mesure du courant de pompage (I_ADC).

12. Dispositif de commande (12) selon la revendication 11, le dispositif de commande (12) étant en outre conçu pour, en association avec une sonde lambda à large bande (10), mettre en œuvre un procédé selon l'une des revendications 2 à 10.

FIG. 1

EP 4 073 500 B1

FIG. 2

FIG. 3

FIG. 4

I_th z.B.1mA

if I_DAC <I_th
  I_Mess=I_DAC
else
  I_Mess=I_ADC

I_DAC

I_ADC
(-)

I_Mess

I_th2+ - - - - -
I_th2- - - - - -

I_th2+ - - - - -
I_th2- - - - - -

EP 4 073 500 B1

15